# FASCICULE DE BREVET EUROPEEN

(11) **EP 3 448 829 B1**
(45) Date de publication et mention de la délivrance du brevet: **19.08.2020**
(21) Numéro de dépôt: 17722117.3
(22) Date de dépôt: 19.04.2017
(51) Int. Cl.: C04B 35/117, B28B 7/34, B28B 7/36, B28B 7/46, C04B 35/14, C04B 35/18, C04B 35/185, C04B 35/447, C04B 35/488, C04B 35/56, C04B 35/565, C04B 35/58, C04B 35/584, C04B 35/626, C04B 35/80, B29C 70/44, B29C 70/02, F01D 5/28, D03D 25/00, B01D 29/05

(54) **PROCÉDÉ DE FABRICATION D'UNE PIÈCE EN MATÉRIAU COMPOSITE PAR INJECTION D'UNE BARBOTINE CHARGÉE DANS UNE TEXTURE FIBREUSE**
VERFAHREN ZUR HERSTELLUNG EINES TEILS AUS EINEM VERBUNDMATERIAL DURCH INJEKTION EINER BELADENEN SCHLÄMME IN EINE FASERIGE TEXTUR
METHOD FOR PRODUCING A PART FROM COMPOSITE MATERIAL BY INJECTING A LOADED SLIP INTO A FIBROUS TEXTURE

(30) Priorité: 25.04.2016 FR 1653635
(43) Date de publication de la demande: 06.03.2019
(73) Titulaire: Safran, 75015 Paris (FR)
(72) Inventeur: PODGORSKI, Michael, 77550 Moissy-Cramayel Cedex (FR); DAMBRINE, Bruno, 77550 Moissy-Cramayel Cedex (FR); RUIZ, Edu, Mont-Royal, QC H3R 1A7 (CA)
(74) Mandataire: Cabinet Beau de Loménie
(86) Numéro de dépôt international: PCT/FR2017/050931
(87) Numéro de publication internationale: WO 2017/187050

(56) Documents cités:
- EP-A1- 2 481 558
- FR-A1- 2 702 475
- FR-A1- 2 958 933
- US-A- 4 814 127
- US-A- 5 143 604
- US-A1- 2012 217 670

## Description

### Arrière-plan de l'invention

La présente invention concerne un procédé de fabrication d'une pièce en matériau composite thermostructural notamment de type Oxyde/Oxyde ou à matrice céramique (CMC), c'est-à-dire comportant un renfort fibreux formé à partir de fibres en matériau céramique réfractaire densifié par une matrice également en matériau céramique réfractaire.

Les pièces en matériau composite Oxyde/Oxyde sont généralement élaborées par drapage dans un moule d'une pluralité de strates fibreuses réalisées à partir de fibres en oxyde réfractaire, les strates étant chacune préalablement imprégnées avec une barbotine chargée de particules d'oxyde réfractaire. L'ensemble des strates ainsi disposées est ensuite compacté à l'aide d'un contre-moule ou d'une bâche à vide et un passage en autoclave. La préforme chargée ainsi obtenue est alors soumise à un frittage ou un traitement thermique de céramisation afin de former une matrice en oxyde réfractaire dans la préforme et obtenir une pièce en matériau composite Oxyde/Oxyde. Cette technique peut être également utilisée pour réaliser des pièces en matériau composite à matrice céramique (CMC). Dans ce cas, les strates fibreuses sont réalisées à partir de fibres de carbure de silicium (SiC) ou de carbone et sont imprégnées avec une barbotine chargée de particules de carbure (ex. SiC), de borure (ex. TiB₂) ou de nitrure (ex. Si₃N₄).

Cependant, ce type de procédé d'élaboration ne permet de réaliser que des pièces en matériau composite Oxyde/Oxyde ou CMC ayant des caractéristiques mécaniques limitées dans certaines directions. En particulier, ces matériaux ont une faible tenue au délaminage et ne résistent pas bien aux efforts de cisaillement.

La réalisation de textures fibreuses obtenues par tissage tridimensionnel entre des fils continus de chaîne et de trame permet d'augmenter la résistance mécanique du matériau et en particulier sa résistance au délaminage. Dans ce cas et également pour des textures fibreuses 2D de forte épaisseur, seuls les procédés utilisant un gradient de pression, comme les procédés de type infusion, moulage par injection dits « RTM » ou aspiration de poudre submicronique dits « APS », permettent de faire pénétrer une barbotine chargée dans la texture fibreuse dont l'épaisseur peut atteindre plusieurs dizaines de millimètres selon les applications visées.

Cependant, le gradient de pression entre la partie de la texture fibreuse par laquelle la barbotine chargée est injectée et l'autre partie de la texture fibreuse par laquelle la phase liquide de la barbotine doit être évacuée est difficile à contrôler sur l'ensemble de la texture fibreuse. Si la pression n'est pas équilibrée sur l'ensemble de la surface de la texture fibreuse en regard du fond du moule comportant un ou plusieurs évents d'évacuation par lequel ou lesquels la phase liquide de la barbotine doit être évacuée, il se crée une différence de pression entre les zones proches des évents et les zones plus éloignées. Dans ce cas, l'évacuation de la phase liquide est délicate car celle-ci doit être retirée de la texture sans perturber la répartition des particules solides (oxyde réfractaire, carbure, borure, nitrure, etc.) déposées via la barbotine. En effet, lors de son évacuation, la phase liquide peut emmener avec elle des particules et/ou modifier la répartition de ces dernières dans la texture fibreuse et conduire à l'apparition d'importantes porosités dans le matériau final en raison du manque de matrice à certains endroits.

FR 2 702 475 A1 divulgue une bouillie céramique qui est pressée par un piston pour imprégner un corps fibreux céramique, contenant par exemple des fibres en carbone. Les particules céramiques en nitrure ou carbure restent dans le corps céramique, tandis que le solvant passe à travers le corps par l'effet d'une aspiration à travers d'un filtre en papier et une plaque métallique poreuse frittée. L'aspiration est le résultat d'une chambre d'aspiration par un vide. La plaque repose sur une base en acier inoxydable poreuse. Cette plaque comporte un grand nombre de trous mesurant 1 mm de diamètre. Le corps fibreux infiltré est chauffé pour le frittage. Comme ébauche fibreuse tridimensionnelle, on a utilisé un morceau de 45 mm x 60 mm découpé à partir d'une masse fibreuse (teneur en fibres 54 %) obtenue par un entrelacement perpendiculaire de fibres de carbone, sous la forme d'une plaque plane de 6 mm d'épaisseur.

US 2012/217670 A1 montre un procédé d'imprégnation d'un corps poreux, possiblement fibreux, par des particules solides. Le moule contient deux chambres séparées par une membrane imperméable, une chambre avec le liquide d'imprégnation, et la chambre supérieure avec un liquide pour transmettre la pression d'imprégnation.

Le filtre du document US 5 143 604 A est soutenu par un élément rigide ajouré qui comporte des encoches sur la surface inférieure. La fonction des encoches est d'améliorer la circulation du liquide.

### Objet et résumé de l'invention

La présente invention a pour but de remédier aux inconvénients précités et de proposer une solution qui permet de réaliser des pièces en matériau composite notamment de type Oxyde/Oxyde ou CMC à partir d'une texture fibreuse épaisse et/ou de géométrie complexe, et ce de manière rapide et fiable tout en permettant un bon contrôle du dépôt et de la répartition des particules solides dans la texture fibreuse afin d'obtenir un matériau sans macroporosité.

A cet effet, l'invention propose un procédé de fabrication d'une pièce en matériau composite comprenant les étapes suivantes :
- formation d'une texture fibreuse à partir de fibres céramiques réfractaires,
- placement de la texture fibreuse dans un moule comportant dans sa partie inférieure une pièce en matériau poreux sur laquelle repose une première face de ladite texture,
- fermeture du moule avec un contre-moule ou un couvercle placé en regard d'une deuxième face de la texture fibreuse,
- injection sous pression d'un liquide contenant une poudre de particules céramiques réfractaires ou de particules d'un précurseur de céramique réfractaire dans la texture fibreuse,
- drainage par la pièce en matériau poreux du liquide ayant traversé la texture fibreuse et rétention de la poudre de particules céramiques réfractaires ou de particules d'un précurseur de céramique réfractaire à l'intérieur de ladite texture par ladite pièce en matériau poreux de manière à obtenir une préforme fibreuse chargée de particules céramiques réfractaires ou de particules d'un précurseur de céramique réfractaire, le liquide étant évacué par au moins un évent présent sur le fond du moule, un élément rigide ajouré étant interposé entre le fond du moule et la pièce en matériau poreux,
- séchage de la préforme fibreuse,
- démoulage de la préforme fibreuse, et
- traitement thermique des particules céramiques réfractaires ou des particules d'un précurseur de céramique réfractaire présentes dans la préforme fibreuse afin de former une matrice céramique réfractaire dans ladite préforme,
un élément rigide ajouré étant interposé entre le fond du moule et la pièce en matériau poreux,
caractérisé en ce que l'élément rigide ajouré comporte des encoches ou découpes sur sa face inférieure en contact avec la surface interne du fond du moule.

En utilisant une pièce en matériau poreux permettant de drainer le liquide de la barbotine, le procédé de l'invention permet d'éliminer le liquide introduit dans la texture fibreuse sans éliminer les particules solides céramiques réfractaires ou les particules d'un précurseur de céramique réfractaire également présentes dans la texture. En outre, en interposant un élément rigide ajouré entre le fond du moule et la pièce en matériau poreux, il est possible d'avoir une pression équilibrée sur la face inférieure de la pièce en matériau poreux, face par laquelle le liquide est évacué. Grâce à la présence d'un élément rigide ajouré entre le fond du moule et la pièce en matériau poreux, le liquide peut circuler entre la pièce en matériau poreux et le fond du moule et atteindre facilement le ou les évents d'évacuation quel que soit son point de sortie au niveau de la pièce en matériau poreux. En outre, la présence d'encoches ou de découpes sur la face inférieure de l'élément rigide ajouré en contact avec la surface interne du fond du moule permet de faciliter la circulation du liquide vers le ou les évents d'évacuation.

Avec le procédé de l'invention, l'élimination du liquide par drainage ne perturbe pas la répartition des particules au sein de la texture fibreuse et permet, par conséquent, d'obtenir une pièce en matériau composite avec une répartition homogène de la matrice dans tout le renfort fibreux. La pièce en matériau composite thermostructural présente, par conséquent, des propriétés mécaniques améliorées.

Selon un premier aspect particulier du procédé de l'invention, l'élément rigide ajouré comporte une pluralité d'ajours, chaque ajour présentant une forme parallélépipédique dont les côtés s'étendent sur une distance inférieure ou égale à 5 mm ou une forme circulaire ayant un diamètre inférieure ou égale à 5 mm.

Selon un deuxième aspect particulier du procédé de l'invention, l'élément rigide ajouré présente une épaisseur d'environ 1 mm.

Selon un quatrième aspect particulier du procédé de l'invention, l'élément rigide ajouré est en un matériau choisi parmi un des matériaux suivants : polytétrafluoroéthylène (PTFE), matériau métallique, polymère, etc.

Selon un mode de mise en œuvre du procédé de l'invention, le moule dans lequel est placée la texture fibreuse comprend une chambre d'imprégnation comportant dans sa partie inférieure la pièce en matériau poreux sur laquelle repose une première face de la texture, la chambre d'imprégnation étant fermée dans sa partie supérieure par une membrane imperméable déformable placée en regard d'une deuxième face de la texture fibreuse, ladite membrane séparant la chambre d'imprégnation d'une chambre de compaction, le liquide contenant les particules céramiques réfractaires ou les particules d'un précurseur de céramique réfractaire étant injecté dans la chambre d'imprégnation entre la deuxième face de la texture fibreuse et la membrane, un fluide de compaction étant injecté dans la chambre de compaction, le fluide exerçant une pression sur la membrane pour forcer le liquide chargé à traverser la texture fibreuse. Lors de l'étape de la formation de la texture fibreuse, les fils peuvent être tissés suivant un tissage tridimensionnel ou multicouche. La texture fibreuse peut être également réalisée par empilement de strates tissées suivant un tissage bidimensionnel, la texture présentant une épaisseur d'au moins 0,5 mm et de préférence d'au moins 1 mm.

Les fils de la préforme peuvent être des fils formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être en un matériau choisi parmi : l'alumine, la mullite, la silice, un aluminosilicate, un aluminophosphate, la zircone, un carbure, un borure et un nitrure.

Dans un exemple de réalisation, la pièce en matériau composite obtenue peut constituer une aube de turbomachine ou encore une pièce d'arrière-corps, une chambre de combustion, un volet, un bras postcombustion, etc.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective éclatée d'un outillage conformément à un mode de réalisation de l'invention,
- la figure 2 est une vue schématique en coupe montrant l'outillage de la figure 1 fermé avec une texture fibreuse positionnée dans celui-ci,
- la figure 3 est une vue schématique en coupe montrant les étapes d'imprégnation d'une texture fibreuse avec une barbotine chargée dans l'outillage de la figure 2,
- la figure 4 est une vue schématique en coupe éclatée d'un outillage conformément à un autre mode de réalisation de l'invention,
- la figure 5 est une vue schématique en coupe montrant l'outillage de la figure 4 fermé avec une texture fibreuse positionnée dans celui-ci,
- les figures 6 et 7 sont des vues schématiques en coupe montrant les étapes d'imprégnation d'une texture fibreuse avec une barbotine chargée dans l'outillage de la figure 5.

### Description détaillée de modes de réalisation

Le procédé de fabrication d'une pièce en matériau composite notamment de type Oxyde/Oxyde ou CMC conforme à la présente invention débute par la réalisation d'une texture fibreuse destinée à former le renfort de la pièce.

La structure fibreuse est réalisée de façon connue par tissage au moyen d'un métier à tisser de type jacquard sur lequel on a disposé un faisceau de fils de chaînes ou torons en une pluralité de couches, les fils de chaînes étant liés par des fils de trame ou inversement. La texture fibreuse peut être réalisée par empilement de strates ou plis obtenu par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Le procédé de l'invention est particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D présentent une géométrie complexe dans laquelle il est difficile d'introduire et de répartir de manière homogène des particules solides en suspension. Le procédé de l'invention est également très bien adapté pour l'introduction d'une barbotine chargée dans des textures fibreuses tissées 3D.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

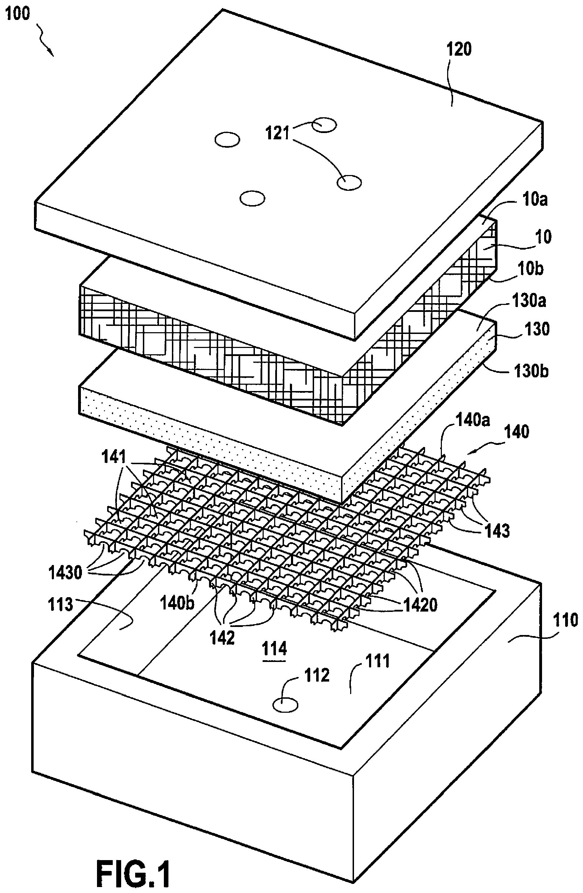

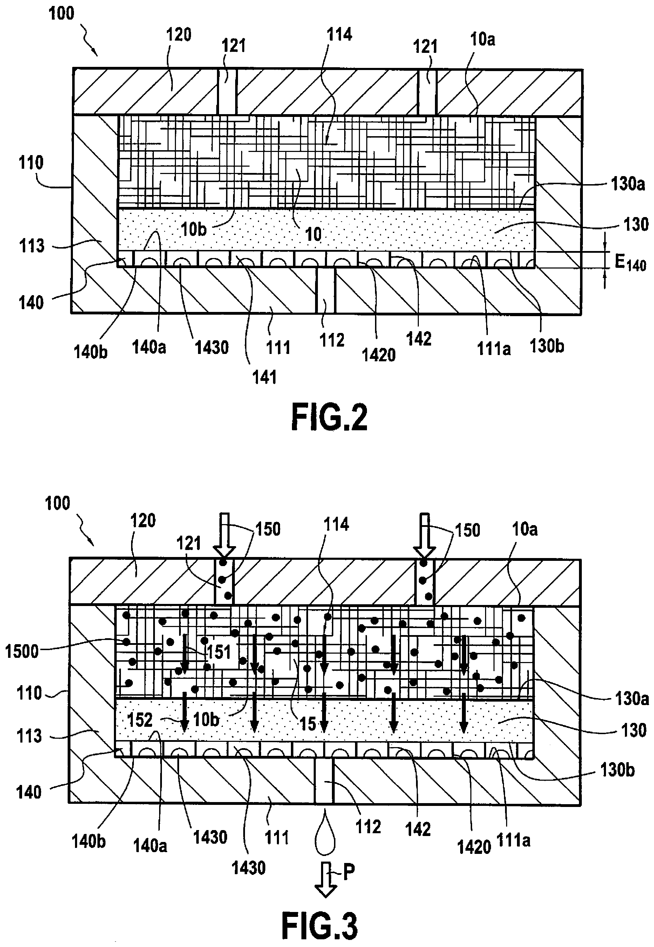

Une fois la texture fibreuse réalisée, celle-ci est placée dans un outillage conforme à l'invention qui permet, comme expliqué ci-après, de déposer des particules céramiques réfractaires ou des particules d'un précurseur de céramique réfractaire au sein de la texture fibreuse. A cet effet et comme illustrée sur les figures 1 et 2, une texture fibreuse 10 est placée dans un outillage 100. Dans l'exemple décrit ici, la texture fibreuse 10 est réalisée suivant une des techniques définies ci-avant (empilement strates 2D ou tissage 3D) avec des fils d'alumine Nextel 610™. La texture fibreuse 10 est ici destinée à former le renfort fibreux d'une aube en matériau composite Oxyde/Oxyde.

L'outillage 100 comprend un moule 110 et un contre-moule 120. Le moule 110 comprend un fond 111 muni d'un évent 112. Le moule 110 comprend également une paroi latérale 113 qui forme avec le fond 111 une cavité de moulage 114. Dans l'exemple illustré, l'outillage 100 dans lequel la texture fibreuse 10 est présente est fermé dans sa partie inférieure par le moule 110 et est fermé dans sa partie supérieure par le contre-moule 120 formant un couvercle refermant l'outillage 100. Le moule 110 et le contre-moule 120 servent à dimensionner la préforme et donc la pièce à obtenir ainsi qu'à ajuster le taux de fibres dans la pièce à obtenir.

Le contre-moule 120 comporte une pluralité de ports d'injection 121 au travers desquels un liquide chargé de particules céramiques réfractaires ou de particules d'un précurseur de céramique réfractaire est destiné à être injecté afin de pénétrer dans la porosité de la texture fibreuse 10 au travers de la première face 10a de la texture fibreuse 1. Dans l'exemple illustré aux figures 1 et 2, le liquide chargé est destiné à être injecté au travers d'une pluralité de ports d'injection 121 débouchant dans des zones différentes de la cavité de moulage. Toutefois, on ne sort pas du cadre de l'invention lorsque le liquide est injecté au travers d'un unique pore d'injection.

Le moule 110 comporte, quant à lui, un unique évent d'évacuation 112 du liquide. Bien entendu, on ne sort pas du cadre de l'invention lorsqu'une pluralité d'évents de sortie est mise en œuvre.

Une pièce en matériau poreux 130 est présente dans la cavité de moulage 114 entre le moule 110 et la texture fibreuse 10. La pièce en matériau poreux 130 présente une face supérieure 130a en contact avec la deuxième face 10b de la texture fibreuse 10 au travers de laquelle le drainage du liquide est destiné à être réalisé. La deuxième face 10b de la texture fibreuse 10 est, dans l'exemple illustré aux figures 1 et 2, située du côté opposé à la première face 10a au travers de laquelle la barbotine est destinée à pénétrer dans la texture 1. Le liquide chargé de particules céramiques réfractaires peut être également injecté sur les côtés de la préforme.

La pièce en matériau poreux 130 peut par exemple être réalisée en polytétrafluoroéthylène (PTFE) microporeux comme les produits « microporous PTFE » vendus par la société Porex®. On peut par exemple utiliser pour réaliser la pièce en matériau poreux 130, le matériau PM 0130 commercialisé par la société Porex® présentant une taille de pores comprise entre 1 µm et 2 µm.

La pièce en matériau poreux 130 permet le drainage du liquide à l'extérieur de la texture fibreuse 10 et son évacuation par l'évent de sortie 112 du fait de l'application d'un gradient de pression entre l'évent de sortie 112 et les ports d'injection 121.

A titre d'exemple, la pièce en matériau poreux 130 peut présenter une épaisseur supérieure ou égale à 1 mm, voire de plusieurs millimètres. Le taux moyen de porosité de la pièce en matériau poreux 130 peut être d'environ 30%. La taille moyenne des pores (D50) de la pièce en matériau poreux peut par exemple être comprise entre 1 µm et 2 µm.

Dans un exemple de réalisation, la pièce en matériau poreux 130 peut être rigide et présenter une forme correspondant à la forme de la préforme et de la pièce en matériau composite à obtenir. Dans ce cas, la pièce en matériau poreux peut par exemple être réalisée par thermoformage. En variante, la pièce en matériau poreux peut être déformable et peut prendre la forme du moule laquelle correspond à la forme de la préforme et de la pièce en matériau composite à obtenir.

Conformément à l'invention, un élément rigide ajouré 140 est interposé entre le fond 111 du moule 110 et la pièce en matériau poreux 130. Plus précisément, l'élément rigide ajouré 140 présente une face supérieure 140a en contact avec la face inférieure 130b de la pièce en matériau poreux 130 et une face inférieure 140b en contact avec la surface interne 111a du fond 111 du moule 110.

Dans l'exemple décrit ici, l'élément rigide ajouré 140 présente une forme de grille formée par le croisement perpendiculaire entre des parois 142 avec des parois 143, les parois 142 et 143 délimitant entre elles des ajours 141 de forme parallélépipédique. Les ajours 141 présentent de préférence une longueur de côté inférieure ou égale à 5 mm afin d'éviter une déformation locale de la pièce en matériau poreux 130. L'élément rigide ajouré 140 peut présenter par exemple une épaisseur E₁₄₀ inférieure ou égale à 1 mm.

L'élément rigide ajouré est réalisé en un matériau compatible chimiquement et/ou mécaniquement à la fois avec le liquide injecté dans la texture fibreuse et la pièce en matériau poreux. Dans l'exemple décrit ici, l'élément rigide ajouré 140 est réalisé en polytétrafluoroéthylène (PTFE) comme la pièce en matériau poreux 130.

Selon une caractéristique de la présente invention, la face inférieure 140b de l'élément rigide 140 en contact avec la surface interne 111a du fond 111 du moule 110 comporte au niveau des parois 142 et 143 des encoches ou des découpes 1420 et 1430 afin de faciliter la circulation du liquide vers l'évent de sortie 112.

Avant l'injection d'une barbotine dans la texture fibreuse 10, une pression de compaction permettant de compacter la texture fibreuse 10 entre le moule 110 et le contre-moule 120 peut être appliquée par serrage du moule ou au moyen d'une presse, cette pression de compaction pouvant être maintenue durant l'injection.

En variante, la pression de compaction peut être appliquée après le début de l'injection du liquide chargé et peut ensuite être maintenue. L'application d'une pression de compaction peut permettre de compacter la texture afin d'aider au drainage du liquide et d'atteindre une épaisseur cible pour la préforme fibreuse sans endommager celle-ci.

Dans l'exemple décrit ici, le liquide chargé correspond à une barbotine contenant des particules céramiques réfractaires. La figure 3 illustre la configuration obtenue durant l'injection d'une barbotine 150 et le drainage du milieu liquide de celle-ci. La barbotine 150 a été injectée sous pression par les ports d'injection 121 de manière à pénétrer dans la texture fibreuse 10 au travers de sa première face 10a. Les particules céramiques réfractaires 1500 présentes dans la barbotine 150 sont destinées à permettre la formation d'une matrice céramique réfractaire dans la porosité de la texture fibreuse 10. Cette matrice céramique réfractaire peut, dans un exemple de réalisation, être une matrice d'oxyde réfractaire.

La barbotine peut par exemple être une suspension d'une poudre d'alumine dans de l'eau. La dimension particulaire moyenne (D50) de la poudre d'alumine peut être comprise entre 0,1 µm et 0,3 µm. La poudre d'alumine utilisée peut être une poudre d'alumine alpha commercialisée par la société Baikowski sous la dénomination SM8.

Plus généralement, la barbotine peut être une suspension comportant des particules céramiques réfractaires présentant une dimension particulaire moyenne comprise entre 0,1 µm et 10 µm. La teneur volumique en particules céramiques réfractaires dans la barbotine peut, avant l'injection, être comprise entre 20% et 40%. Les particules céramiques réfractaires peuvent comporter un matériau choisi parmi : l'alumine, la mullite, la silice, un aluminosilicate, un aluminophosphate, la zircone, un carbure, un borure et un nitrure. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu liquide de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1,5 et 4. La barbotine peut, en outre, comporter un liant organique comme de l'alcool polyvinylique (PVA) lequel est notamment soluble dans l'eau.

Comme illustré sur la figure 3, les particules céramiques réfractaires 1500 sont présentes après injection de la barbotine 150 dans la porosité de la texture fibreuse 10. Les flèches 151 représentent le mouvement de la barbotine 150 injectée dans la texture fibreuse 10. Les flèches 152 représentent quant à elles le mouvement du milieu ou phase liquide de la barbotine drainé par la pièce en matériau poreux 130.

Le contre-moule 120 exerce une pression sur la texture fibreuse 10 pendant et après l'étape d'injection.

Un pompage P peut, en outre, être réalisé au niveau de l'évent de sortie 112 durant le drainage, par exemple au moyen d'une pompe à vide primaire. La réalisation d'un tel pompage permet d'améliorer le drainage et de sécher plus rapidement la texture fibreuse.

En alternative ou en combinaison, on peut durant le drainage chauffer le milieu liquide encore présent dans la porosité de la texture fibreuse afin d'évaporer ce dernier au travers de la deuxième face de la texture fibreuse et de la pièce en matériau poreux. Par exemple, la température du milieu liquide peut être élevée à une température comprise entre 80°C et 105°C.

Dans cette configuration, la pièce en matériau poreux 130 permet de retenir dans la texture fibreuse 10 les particules céramiques réfractaires 1500 initialement présentes dans la barbotine et que tout ou partie de ces particules se déposent par filtration dans la texture fibreuse 10.

Une fois les étapes d'injection et de drainage effectuées, on obtient une préforme fibreuse 15 chargée de particules céramiques réfractaires, par exemple de particules d'oxyde céramique réfractaire, par exemple d'alumine.

La préforme obtenue est ensuite séchée puis démoulée, la préforme pouvant conserver après démoulage la forme adoptée dans la cavité de moulage, par exemple sa forme adoptée après compaction entre le moule et le contre-moule grâce à la présence d'un liant dans la barbotine tel que du PVA.

La préforme est ensuite soumise à un traitement thermique, ici un frittage, par exemple sous air à une température comprise entre 1000°C et 1200°C afin de fritter les particules céramiques réfractaires et ainsi former une matrice céramique réfractaire dans la porosité de la préforme fibreuse. On obtient alors une pièce en matériau composite, par exemple une pièce en matériau composite Oxyde/Oxyde, munie d'un renfort fibreux formé par la préforme fibreuse et présentant un taux volumique de matrice élevé avec une répartition homogène de la matrice céramique réfractaire dans tout le renfort fibreux.

Une pièce en matériau composite CMC autre que Oxyde/Oxyde peut être obtenue de la même façon en réalisant la texture fibreuse avec des fibres de carbure de silicium et/ou de carbone et en utilisant une barbotine chargée de particules de carbure (par exemple de SiC), de borure (par exemple de TiB₂) ou de nitrure (par exemple de Si₃N₄).

Le liquide chargé injecté dans la préforme peut, en variante, comporter des particules d'un précurseur de céramique réfractaire, par exemple de type sol-gel ou polymérique. Dans ce cas, le traitement thermique comporte au moins une étape de transformation du précurseur de céramique réfractaire en un matériau céramique (étape dite de céramisation) suivi éventuellement d'une étape supplémentaire de frittage afin de densifier d'avantage la pièce en matériau composite.

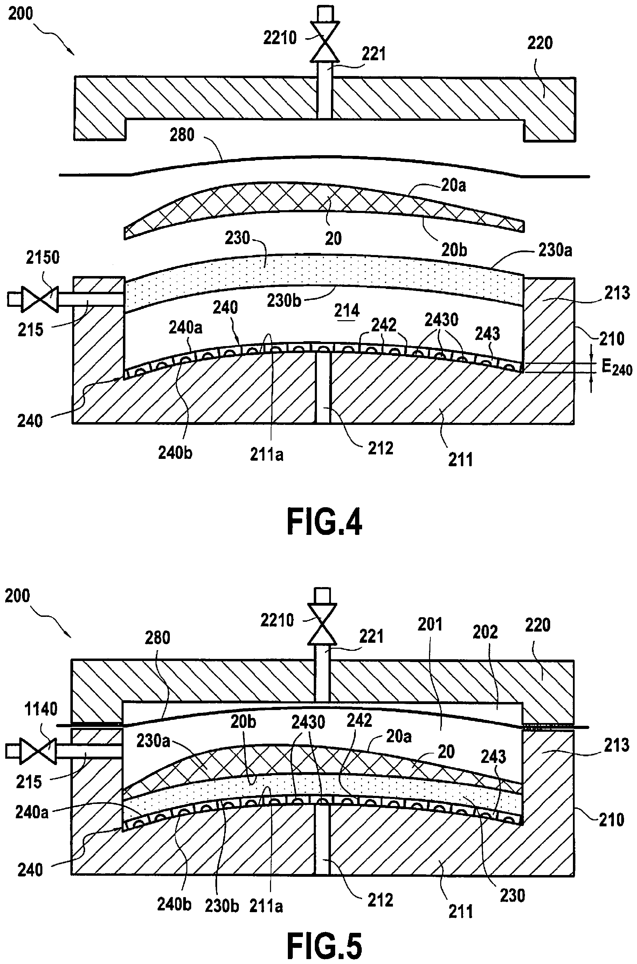

Les figures 4 à 7 illustrent un procédé de fabrication d'une pièce en matériau composite selon un autre mode de réalisation de l'invention. Comme illustrée sur les figures 4 et 5, une texture fibreuse 20 est placée dans un outillage 200. Dans l'exemple décrit ici, la texture fibreuse 20 est réalisée suivant une des techniques définies ci-avant (empilement strates 2D ou tissage 3D) avec des fils d'alumine Nextel 610™. La texture fibreuse 20 est ici destinée à former le renfort fibreux d'une aube en matériau composite Oxyde/Oxyde.

L'outillage 200 comprend un moule 210 dont le fond 211 est muni d'un évent 212. Le moule 210 comprend également une paroi latérale 213 comportant un port d'injection 215 équipée d'une vanne 2150. Une pièce en matériau poreux 230 est placée en dessous de la texture fibreuse 20, la pièce en matériau poreux 120 comportant une face supérieure 230a destinée à recevoir la texture fibreuse 20. Dans l'exemple décrit ici, la pièce 230 est réalisée avec un matériau déformable de manière à épouser une forme ou un profil correspondant à la forme de la pièce finale à fabriquer défini par le moule 210, ici une aube de moteur aéronautique. En se conformant, la pièce 230 présente sur sa face supérieure 230a une forme similaire à celle de la pièce à fabriquer. La pièce 120 peut par exemple être réalisée en polytétrafluoroéthylène (PTFE) microporeux comme les produits « microporous PTFE » vendus par la société Porex®. Selon une variante de réalisation, la pièce en matériau poreux est rigide et présente sur face supérieure une géométrie correspondant à la forme de la pièce finale à fabriquer. Dans ce cas la pièce peut être notamment réalisée par thermoformage. A titre d'exemple, la pièce en matériau poreux peut présenter une épaisseur de plusieurs millimètres et un taux moyen de porosités d'environ 30%. La taille moyenne des pores (D50) de la pièce en matériau poreux peut par exemple être comprise entre 1 µm et 2 µm.

Conformément à l'invention, un élément rigide ajouré 240 est interposé entre le fond 211 du moule 210 et la pièce en matériau poreux 230. Plus précisément, l'élément rigide ajouré 240 présente une face supérieure 240a en contact avec la face inférieure 230b de la pièce en matériau poreux 230 et une face inférieure 240b en contact avec la surface interne 211a du fond 211 du moule 210.

Dans l'exemple décrit ici, l'élément rigide ajouré 240 présente, comme l'élément rigide ajouré 140 représenté sur la figure 1, une forme de grille formée par le croisement perpendiculaire entre des parois 242 avec des parois 243, les parois 242 et 243 délimitant entre elles des ajours de forme parallélépipédique. Les ajours présentent de préférence une longueur de côté inférieure ou égale à 5 mm afin d'éviter une déformation locale de la pièce en matériau poreux 230. L'élément rigide ajouré 240 peut présenter par exemple une épaisseur E₂₄₀ inférieure ou égale à 1 mm. L'élément rigide ajouré 240 est en outre conformé suivant une courbure correspondant à celle présentée par la surface 211a du 211 du moule 210.

L'élément rigide ajouré est réalisé en un matériau compatible chimiquement et/ou mécaniquement à la fois avec le liquide chargé injecté dans la texture fibreuse et la pièce en matériau poreux. Dans l'exemple décrit ici, l'élément rigide ajouré 240 est réalisé en polytétrafluoroéthylène (PTFE) comme la pièce en matériau poreux 230.

Selon une caractéristique de la présente invention, la face inférieure 240b de l'élément rigide 240 en contact avec la surface interne 211a du fond 211 du moule 210 comporte au niveau de ses parois 243 des encoches ou des découpes 2430 afin de faciliter la circulation de la phase liquide vers l'évent de sortie 212. Les parois 242 comportent également des encoches ou découpes (non représentées sur les figures 4 à 7).

L'outillage 200 comprend en outre un couvercle 220 comportant un port d'injection 221 équipé d'une vanne 2210 et une membrane déformable 280 qui, une fois l'outillage fermé (figure 5), sépare une chambre d'imprégnation 201 dans laquelle est présente la texture fibreuse 20 d'une chambre de compaction 202 située au-dessus de la membrane 280. La membrane 280 peut être réalisée par exemple en silicone.

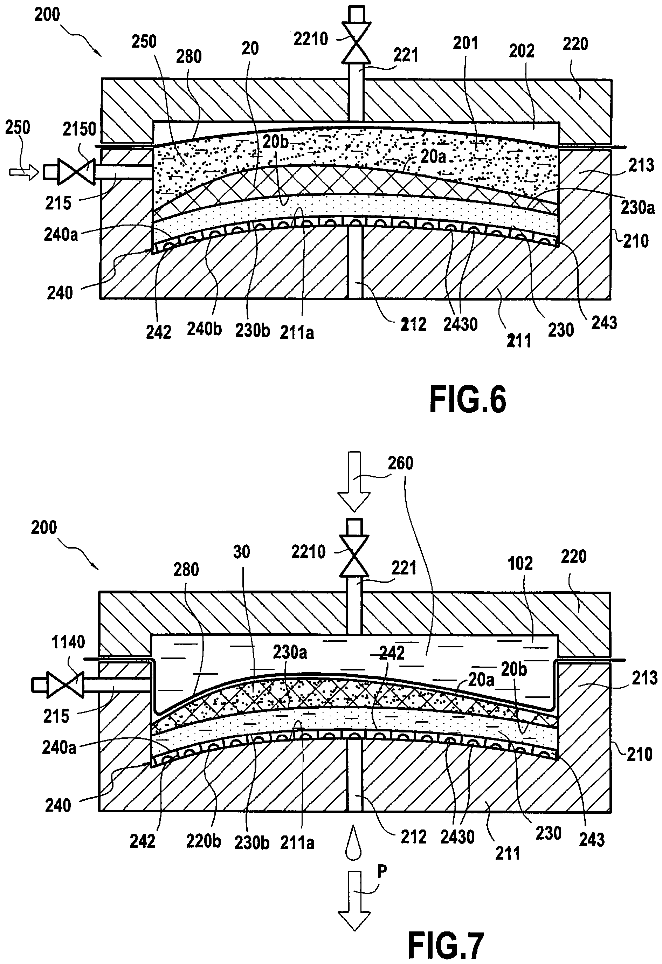

Après placement de la texture 20 sur la face supérieure 230a de la pièce en matériau poreux 230, on ferme le moule 210 avec le couvercle 230 (figure 5). On injecte alors un liquide chargé, ici une barbotine 250, dans la chambre d'imprégnation 201 par le port d'injection 215 dont la vanne 2150 est ouverte (figure 6). La barbotine 250 est, dans cet exemple, destinée à permettre la formation d'une matrice d'oxyde réfractaire dans la texture. La barbotine 250 correspond à une suspension contenant une poudre de particules d'oxyde réfractaire, les particules présentant une dimension particulaire moyenne comprise entre 0,1 µm et 10 µm. La phase liquide de la barbotine peut être notamment constituée par de l'eau (pH acide), de l'éthanol ou tout autre liquide dans lequel il est possible de mettre la poudre désirée en suspension. Un liant organique peut être aussi ajouté (PVA par exemple, soluble dans l'eau). Ce liant permet d'assurer la tenue du cru après séchage et avant frittage.

La barbotine 250 peut par exemple correspondre à une suspension aqueuse constituée de poudre d'alumine dont la dimension particulaire moyenne (D50) est comprise entre 0,1 µm et 0,3 µm et dont la fraction volumique est comprise entre 20% et 40%, la suspension étant acidifiée par de l'acide nitrique (pH compris entre 1,5 et 4). En outre de l'alumine, les particules d'oxyde réfractaire peuvent être également en un matériau choisi parmi l'alumine, la mullite, la silice, un aluminosilicate, un aluminophosphate, la zircone, un carbure, un borure et un nitrure. En fonction de leur composition de base, les particules d'oxyde réfractaire peuvent être en outre mélangées avec des particules d'alumine, de zircone, d'aluminosilicate, d'oxydes de Terre rare, de dissilicates de Terre rare (utilisés par exemple dans les barrières environnementales ou thermiques) ou toute autre charge permettant de rajouter des fonctions spécifiques au matériau final (noir de carbone, graphite, carbure de silicium, etc.).

La quantité de barbotine 250 injectée dans la chambre d'imprégnation 201 est déterminée en fonction du volume de la texture fibreuse 20 à imprégner. C'est la quantité de poudre initialement introduite qui pilotera l'épaisseur de calage et donc le taux volumique de fibres (Tvf) et de matrice (Tvm).

Une fois la barbotine injectée dans la chambre d'imprégnation 201, on procède à l'opération de compaction en injectant un fluide de compaction 260, par exemple de l'huile, dans la chambre de compaction 202 par le port d'injection 221 dont la vanne 2210 est ouverte, la vanne 2150 du port d'injection 215 ayant été préalablement fermée (figure 7). Le fluide de compression 260 applique une pression sur la barbotine 250 au travers de la membrane 280 qui force la barbotine 250 à pénétrer dans la texture fibreuse 20. Le fluide 260 impose une pression sur l'intégralité de la membrane 280 et, par conséquent, sur l'intégralité de la barbotine présente au-dessus de la texture 20. La pression appliquée par la membrane 280 sur la barbotine et sur la texture fibreuse est de préférence inférieure à 15 bars, par exemple 7 bars, de manière à faire pénétrer la barbotine dans la texture et compacter suffisamment la texture pour permettre à la phase liquide de la barbotine d'être drainée par la pièce en matériau poreux sans dégrader la préforme résultante.

La pièce en matériau poreux 230 qui est située du côté de la face 20b de la texture fibreuse opposée à la face 20a à partir de laquelle la barbotine pénètre dans la texture remplit plusieurs fonctions. En effet, la pièce 230 permet le drainage du liquide de la barbotine à l'extérieur de la texture fibreuse, le liquide ainsi drainé étant évacué ici par l'évent 212. Le drainage est réalisé à la fois pendant et après l'opération de compaction. Lorsqu'il n'y a plus de liquide s'écoulant par l'évent 212, le drainage est terminé. En combinaison avec l'application d'une pression sur la barbotine par le fluide de compression, un pompage P, par exemple au moyen d'une pompe à vide primaire (non représentée sur les figures 4 à 7), peut être réalisé au niveau de l'évent 212. Ce pompage est optionnel. Un chauffage peut suffire. Inversement, un pompage sans chauffage peut suffire. Toutefois la combinaison des deux permet d'accélérer le séchage.

En outre, l'outillage peut être muni de moyens de chauffage, comme des éléments résistifs intégrés aux parois de l'outillage, afin d'augmenter la température dans la chambre de compaction et faciliter l'évacuation du liquide de la barbotine par évaporation. La température dans la chambre de compaction peut être élevée à une température comprise entre 80°C et 105°C.

La pièce en matériau poreux 220 permet de retenir les particules solides d'oxyde réfractaire présentes dans la barbotine, les particules d'oxyde réfractaire se déposant ainsi progressivement dans la texture fibreuse. Cela permet d'obtenir ultérieurement (i.e. après frittage) la matrice.

La pièce 220 permet également de maintenir la texture fibreuse en forme pendant l'opération de compaction car elle reprend sur sa face supérieure 220a la forme du fond 211 du moule 210 correspondant à la forme de la pièce finale à fabriquer.

On obtient alors une préforme fibreuse 30 chargée de particules d'oxyde réfractaire, ici des particules d'alumine du type décrit précédemment. La préforme est ensuite démoulée par vidange du fluide de compression de la chambre de compaction 202, la préforme conservant après démoulage sa géométrie de compaction grâce à la présence d'un liant dans la barbotine tel que du PVA.

La préforme est ensuite extraite de l'outillage et soumise à un traitement thermique de frittage sous air à une température comprise entre 1000°C et 1200°C afin de fritter les particules d'oxyde réfractaire ensemble et former ainsi une matrice en oxyde réfractaire dans la préforme. On obtient alors une pièce en matériau composite Oxyde/Oxyde munie d'un renfort fibreux obtenu par tissage 3D avec une répartition homogène de la matrice dans tout le renfort fibreux.

Une pièce en matériau composite CMC peut être obtenue de la même façon en réalisant la texture fibreuse avec des fibres de carbure de silicium ou de carbone et en utilisant une barbotine chargée de particules de carbure de carbure (ex. SiC), de borure (ex. TiB₂) ou de nitrure (ex. Si₃N₄).

Le liquide chargé injecté dans la préforme peut, en variante, comporter des particules d'un précurseur de céramique réfractaire, par exemple de type sol-gel ou polymérique. Dans ce cas, le traitement thermique comporte au moins une étape de transformation du précurseur de céramique réfractaire en un matériau céramique (étape dite de céramisation) suivi éventuellement d'une étape supplémentaire de frittage afin de densifier d'avantage la pièce en matériau composite.

L'élément rigide ajouré selon l'invention peut avoir diverses formes. Il peut notamment avoir une forme de grille avec des ajours parallélépipédique comme décrit précédemment, une forme de plaque comprenant une pluralité de perforations circulaires formant les ajours, ou encore une forme de structure alvéolaire de type Nida® dont les cellules constituent les ajours.

Comme indiqué ci-avant, l'élément rigide ajouré est de préférence réalisé en un matériau compatible chimiquement et/ou mécaniquement à la fois avec la barbotine injectée dans la texture fibreuse et la pièce en matériau poreux. L'élément rigide ajouré peut être notamment réalisé avec un des matériaux suivants : polytétrafluoroéthylène (PTFE), matériau métallique, polymère.

## Revendications

1. Procédé de fabrication d'une pièce en matériau composite comprenant les étapes suivantes :
- formation d'une texture fibreuse (10) à partir de fibres céramiques réfractaires,
- placement de la texture fibreuse (10) dans un moule (110) comportant dans sa partie inférieure une pièce en matériau poreux (130) sur laquelle repose une première face (10b) de ladite texture (10),
- fermeture du moule avec un contre-moule ou un couvercle (120) placé en regard d'une deuxième face (10a) de la texture fibreuse (10),
- injection sous pression d'un liquide (150) contenant une poudre de particules céramiques réfractaires ou de particules d'un précurseur de céramique réfractaire dans la texture fibreuse (10),
- drainage par la pièce en matériau poreux (120) du liquide ayant traversé la texture fibreuse (10) et rétention de la poudre de particules céramiques réfractaires ou de particules d'un précurseur de céramique réfractaire à l'intérieur de ladite texture par ladite pièce en matériau poreux (130) de manière à obtenir une préforme fibreuse (15) chargée de particules céramiques réfractaires ou de particules d'un précurseur de céramique réfractaire, le liquide étant évacué par au moins un évent présent sur le fond du moule,
- séchage de la préforme fibreuse (15),
- démoulage de la préforme fibreuse (15), et
- traitement thermique des particules céramiques réfractaires ou des particules d'un précurseur de céramique réfractaire présentes dans la préforme fibreuse afin de former une matrice céramique réfractaire dans ladite préforme,
un élément rigide ajouré (140) étant interposé entre le fond (111) du moule (110) et la pièce en matériau poreux (130),
**caractérisé en ce que** l'élément rigide ajouré (140) comporte des encoches ou découpes (1420, 1430) sur sa face inférieure (140b) en contact avec la surface interne (111a) du fond (111) du moule (110).

2. Procédé selon la revendication 1, **caractérisé en ce que** l'élément rigide ajouré (140) comporte une pluralité d'ajours (141), chaque ajour présentant une forme parallélépipédique dont les côtés s'étendent sur une distance inférieure ou égale à 5 mm ou une forme circulaire ayant un diamètre inférieure ou égale à 5 mm.

3. Procédé selon la revendication 2, **caractérisé en ce que** l'élément rigide ajouré (140) présente une épaisseur (E₁₄₀) d'environ 1 mm.

4. Procédé selon l'une quelconque des revendications 1 à 3, **caractérisé en ce que** l'élément rigide ajouré (140) est en un matériau choisi parmi un des matériaux suivants : polytétrafluoroéthylène (PTFE), matériau métallique, polymère.

5. Procédé selon l'une quelconque des revendications 1 à 4, **caractérisé en ce que** le moule (210) dans lequel est placé la texture fibreuse comprend une chambre d'imprégnation (201) comportant dans sa partie inférieure la pièce en matériau poreux (230) sur laquelle repose une première face (20b) de ladite texture (20), la chambre d'imprégnation (201) étant fermée dans sa partie supérieure par une membrane imperméable déformable (280) placée en regard d'une deuxième face (20a) de la texture fibreuse (20), ladite membrane (280) séparant la chambre d'imprégnation (201) d'une chambre de compaction (202), le liquide (250) contenant la poudre de particules céramiques réfractaires ou de particules d'un précurseur de céramique réfractaire étant injectée dans la chambre d'imprégnation entre la deuxième face (20a) de la texture fibreuse (20) et la membrane (280), un fluide de compaction (260) étant injecté dans la chambre de compaction (202), le fluide exerçant une pression sur la membrane (280) pour forcer le liquide (250) contenant la poudre de particules céramiques réfractaires ou de particules d'un précurseur de céramique réfractaire (250) à traverser la texture fibreuse (20).

6. Procédé selon l'une quelconque des revendications 1 à 5, **caractérisé en ce que**, lors de l'étape de la formation de la texture fibreuse, les fils sont tissés suivant un tissage tridimensionnel ou multicouche.

7. Procédé selon l'une quelconque des revendications 1 à 6, **caractérisée en ce que** les fils de la préforme sont formés de fibres constituées d'un ou plusieurs des matériaux suivants : l'alumine, la mullite, la silice, un aluminosilicate, un borosilicate, du carbure de silicium et du carbone.

8. Procédé selon l'une quelconque des revendications 1 à 7, **caractérisé en ce que** les particules céramiques réfractaires sont en un matériau choisi parmi : l'alumine, la mullite, la silice, un aluminosilicate, un aluminophosphate, la zircone, un carbure, un borure et un nitrure.

9. Procédé selon l'une quelconque des revendications 1 à 8, **caractérisé en ce que** la pièce en matériau composite obtenue constitue une aube de turbomachine, une pièce d'arrière-corps, une chambre de combustion, un volet ou un bras postcombustion.

## Patentansprüche

1. Verfahren zur Herstellung eines Teils aus Verbundwerkstoff, das die folgenden Schritte umfasst:
- Ausbilden einer Faserstruktur (10) aus feuerfesten Keramikfasern,
- Anordnen der Faserstruktur (10) in einer Form (110), die in ihrem unteren Teil ein Teil aus porösem Material (130) umfasst, auf dem eine erste Seite (10b) der Struktur (10) aufliegt,
- Schließen der Form mit einer Gegenform oder einem Deckel (120), die/der gegenüber einer zweiten Seite (10a) der Faserstruktur (10) angeordnet ist,
- Einspritzen einer Flüssigkeit (150), welche ein Pulver aus feuerfesten Keramikteilchen oder aus Teilchen eines feuerfesten Keramikvorläufers enthält, unter Druck in die Faserstruktur (10),
- Drainieren der Flüssigkeit, welche die Faserstruktur (10) durchlaufen hat, über das Teil aus porösem Material (130), und Zurückhalten des Pulvers aus feuerfesten Keramikteilchen oder aus Teilchen eines feuerfesten Keramikvorläufers innerhalb der Struktur über das Teil aus porösem Material (130), um einen mit feuerfesten Keramikteilchen oder mit Teilchen eines feuerfesten Keramikvorläufers beladenen Faservorformling (15) zu erhalten, wobei die Flüssigkeit über wenigstens einen Abzug, der an dem Boden der Form vorhanden ist, abgeführt wird,
- Trocknen des Faservorfomlings (15),
- Ausformen des Faservorformlings (15), und
- Wärmebehandlung der feuerfesten Keramikteilchen oder der Teilchen eines feuerfesten Keramikvorläufers, die in dem Faservorformling vorhanden sind, um eine feuerfeste Keramikmatrix in dem Vorformling zu bilden,
wobei ein durchbrochenes starres Element (140) zwischen dem Boden (111) der Form (110) und dem Teil aus porösem Material (130) angeordnet ist,
**dadurch gekennzeichnet, dass** das durchbrochene starre Element (140) an seiner Unterseite (140b) Nuten oder Ausschnitte (1420, 1430) aufweist, die mit der Innenfläche (111a) des Bodens (111) der Form (110) in Kontakt stehen.

2. Verfahren nach Anspruch 1, **dadurch gekennzeichnet, dass** das durchbrochene starre Element (140) eine Vielzahl von Öffnungen (141) umfasst, wobei jede Öffnung eine Quaderform aufweist, deren Seiten sich über eine Strecke von weniger als oder gleich 5 mm erstrecken, oder eine Kreisform, die einen Durchmesser von weniger als oder gleich 5 mm hat.

3. Verfahren nach Anspruch 2, **dadurch gekennzeichnet, dass** das durchbrochene starre Element (140) eine Dicke (E₁₄₀) von etwa 1 mm aufweist.

4. Verfahren nach einem der Ansprüche 1 bis 3, **dadurch gekennzeichnet, dass** das durchbrochene starre Element (140) aus einem Material besteht, das aus einem der folgenden Materialien ausgewählt ist: Polytetrafluorethylen (PTFE), metallisches Material, Polymer.

5. Verfahren nach einem der Ansprüche 1 bis 4, **dadurch gekennzeichnet, dass** die Form (210), in der die Faserstruktur angeordnet ist, eine Imprägnierungskammer (201) umfasst, welche in ihrem unteren Teil das Teil aus porösem Material (230) enthält, auf dem eine erste Seite (20b) der Struktur (20) aufliegt, wobei die Imprägnierungskammer (201) in ihrem oberen Teil durch eine verformbare undurchlässige Membran (280), die gegenüber einer zweiten Seite (20a) der Faserstruktur (20) angeordnet ist, verschlossen ist, wobei die Membran (280) die Imprägnierungskammer (201) von einer Verdichtungskammer (202) trennt, wobei die Flüssigkeit (250), welche das Pulver aus feuerfesten Keramikteilchen oder aus Teilchen eines feuerfesten Keramikvorläufers enthält, in die Imprägnierungskammer zwischen der zweiten Seite (20a) der Faserstruktur (20) und der Membran (280) eingespritzt wird, wobei ein Verdichtungsfluid (260) in die Verdichtungskammer (202) eingespritzt wird, wobei das Fluid einen Druck auf die Membran (280) ausübt, um die Flüssigkeit (250), welche das Pulver aus feuerfesten Keramikteilchen oder aus Teilchen eines feuerfesten Keramikvorläufers enthält, zu zwingen, die Faserstruktur (20) zu durchlaufen.

6. Verfahren nach einem der Ansprüche 1 bis 5, **dadurch gekennzeichnet, dass** die Fäden während des Schrittes des Ausbildens der Faserstruktur in einer dreidimensionalen oder mehrlagigen Webart gewebt werden.

7. Verfahren nach einem der Ansprüche 1 bis 6, **dadurch gekennzeichnet, dass** die Fäden des Vorformlings von Fasern gebildet sind, die aus einem oder mehreren der folgenden Materialien bestehen: Aluminiumoxid, Mullit, Siliciumdioxid, einem Aluminosilikat, einem Borosilikat, Siliciumcarbid und Kohlenstoff.

8. Verfahren nach einem der Ansprüche 1 bis 7, **dadurch gekennzeichnet, dass** die feuerfesten Keramikteilchen aus einem Material bestehen, das ausgewählt ist aus: Aluminiumoxid, Mullit, Siliciumdioxid, einem Aluminosilikat, einem Aluminiumphosphat, Zirkonoxid, einem Carbid, einem Borid und einem Nitrid.

9. Verfahren nach einem der Ansprüche 1 bis 8, **dadurch gekennzeichnet, dass** das erhaltene Teil aus Verbundwerkstoff eine Schaufel einer Turbomaschine, ein Heckteilstück, eine Brennkammer, eine Klappe oder einen Nachbrennerarm bildet.

## Claims

1. A method of fabricating a composite material part, the method comprising the following steps:
- forming a fiber texture (10) from refractory ceramic fibers;
- placing the fiber texture (10) in a mold (110) including in its bottom portion a part (130) made of porous material on which a first face (10b) of said texture (10) rests;
- closing the mold with a mold cover or lid (120) placed facing a second face (10a) of the fiber texture (10) ;
- injecting a liquid (150) under pressure into the fiber texture (10), the liquid containing a powder of refractory ceramic particles or of refractory ceramic precursor particles;
- draining via the porous material part (120) the liquid that has passed through the fiber texture (10), while said porous material part (130) retains the powder of refractory ceramic particles or of refractory ceramic precursor particles within said texture so as to obtain a fiber preform (15) filled with refractory ceramic particles or with refractory ceramic precursor particles, the liquid being discharged via at least one vent present in the bottom of the mold;
- drying the fiber preform (15);
- unmolding the fiber preform (15); and
- subjecting the refractory ceramic particles or the refractory ceramic precursor particles present in the fiber preform to heat treatment so as to form a refractory ceramic matrix in said preform;
a perforated rigid element (140) being interposed between the bottom (111) of the mold (110) and the porous material part (130);
the method being **characterized in that** the perforated rigid element (140) includes notches or cutouts (1420, 1430) in its bottom face (140b) in contact with the inside surface (111a) of the bottom (111) of the mold (110).

2. A method according to claim 1, **characterized in that** the perforated rigid element (140) has a plurality of perforations (141), each perforation presenting a rectangular shape of sides extending over a distance less than or equal to 5 mm or a circular shape of diameter less than or equal to 5 mm.

3. A method according to claim 2, **characterized in that** the perforated rigid element (140) presents a thickness (E₁₄₀) of about 1 mm.

4. A method according to any one of claims 1 to 3, **characterized in that** the perforated rigid element (140) is made of a material selected from the following materials: polytetrafluoroethylene (PTFE); a metal material; a polymer.

5. A method according to any one of claims 1 to 4, **characterized in that** the mold (210) in which the fiber texture is placed comprises an impregnation chamber (201) including in its bottom portion the porous material part (230) on which a first face (20b) of said texture (20) rests, the impregnation chamber (201) being closed in its top portion by a deformable impermeable diaphragm (280) placed facing a second face (20a) of the fiber texture (20), said diaphragm (280) separating the impregnation chamber (201) from a compacting chamber (202), the liquid (250) containing the powder of refractory ceramic particles or of refractory ceramic precursor particles being injected into the impregnation chamber between the second face (20a) of the fiber texture (20) and the diaphragm (280), a compacting fluid (260) being injected into the compacting chamber (202), the fluid exerting pressure on the diaphragm (280) in order to force the liquid (250) containing the powder of refractory ceramic particles or of refractory ceramic precursor particles (250) to pass through the fiber texture (20).

6. A method according to any one of claims 1 to 5, **characterized in that**, during the step of forming the fiber texture, the yarns are woven with three-dimensional weaving or multilayer weaving.

7. A method according to any one of claims 1 to 6, **characterized in that** the yarns of the preform are made of fibers constituted by one or more of the following materials: alumina; mullite; silica; an aluminosilicate; a borosilicate; silicon carbide; and carbon.

8. A method according to any one of claims 1 to 7, **characterized in that** the refractory ceramic particles are made of a material selected from: alumina; mullite; silica; an aluminosilicate; an aluminophosphate; zirconia; a carbide; a boride; and a nitride.

9. A method according to any one of claims 1 to 8, **characterized in that** the composite material part that is obtained constitutes a turbine engine blade, an afterbody part, a combustion chamber, a flap, or an afterburner arm.
